# EUROPÄISCHE PATENTSCHRIFT

(11) **EP 2 368 778 B1**
(45) Veröffentlichungstag und Bekanntmachung des Hinweises auf die Patenterteilung: **12.02.2014**
(21) Anmeldenummer: 11001725.8
(22) Anmeldetag: 02.03.2011
(51) Int. Cl.: B60T 13/22, B60T 13/68

(54) **Bremssteuerungssystem einer mobilen Arbeitsmaschine, insbesondere Flurförderzeug**
Brake control system of a mobile work machine, in particular industrial truck
Système de commande de freinage d'une machine de travail mobile, notamment chariot élévateur

(30) Priorität: 10.03.2010 DE 102010010824
(43) Veröffentlichungstag der Anmeldung: 28.09.2011
(73) Patentinhaber: Linde Material Handling GmbH, 63743 Aschaffenburg (DE)
(72) Erfinder: Magsaam, Peter, 63811 Stockstadt (DE); Meth, Henning, 63150 Heusenstamm (DE); Knechtel, Hans-Ulrich, 63785 Obernburg (DE)
(74) Vertreter: Geirhos, Johann

(56) Entgegenhaltungen:
- WO-A2-2009/156833
- DE-A1-102007 037 967
- DE-A1-102009 005 009
- DE-A1-102009 031 741
- DE-A1-102009 031 743

## Beschreibung

Die Erfindung betrifft ein Bremssteuerungssystem einer mobilen Arbeitsmaschine, insbesondere Flurförderzeug, mit einer als Federspeicherbremse ausgebildeten Bremseinrichtung, insbesondere einer als Feststellbremse arbeitenden Bremseinrichtung, die hydraulisch mittels eines in einem Bremslösedruckraum anstehenden Bremslösedruckes in Richtung einer Lösestellung beaufschlagbar ist, wobei zur Steuerung der Bremseinrichtung dem Bremslösedruckraum eine elektrisch betätigbare Bremsventileinrichtung vorgeschaltet ist, die ein elektrisch betätigbares Schaltventil aufweist, das eine im stromlosen Zustand wirksame Sperrstellung und eine elektrisch schaltbare, den Bremslösedruckraum mit einem Behälter verbindenden Drucklosstellung aufweist, und mittels der Bremseinrichtung eine von einer Bedienperson ausgelöste Notbremsfunktion erzielbar ist.

Derartige Bremseinrichtungen werden zur Erzielung einer Feststellbremsfunktion und einer Notbremsfunktion eingesetzt. Als Feststellbremsfunktion im Sinne dieser Erfindung wird hierbei ein statischer Fall angesehen, bei dem die Bremseinrichtung im Stillstand der Arbeitsmaschine in die Bremsstellung betätigt wird. Als Notbremsfunktion im Sinne dieser Erfindung wird ein dynamischer Fall angesehen, bei dem mit der Bremseinrichtung die fahrende Arbeitsmaschine abgebremst wird.

Bei mobilen Arbeitsmaschinen, beispielsweise als elektrisch-betriebene Gabelstapler ausgebildeten Flurförderzeugen, werden als Federspeicherbremsen ausgebildete Bremseinrichtungen als Feststellbremse und/oder Betriebsbremse verwendet. Die von der Bedienperson zu bedienenden Betätigungselemente sind hierbei in der Regel von einem Pedal, beispielsweise einem Bremspedal oder einer Doppelpedalanordnung, für die Funktion der Betriebsbremse und einem Betätigungsmittel; beispielsweise einem Handbremshebel, für die Funktion der Feststellbremse gebildet. Beide Betätigungselemente wirken hierbei unabhängig voneinander auf einen Aktuator der Federspeicherbremse, beispielsweise einem einen Bremsdruck erzeugenden Bremsventil oder einem einen Bremslösedruck erzeugenden weiteren Bremsventil.

Es ist bereits bekannt, eine automatische Feststellbremsfuhktion vorzusehen, mittels der bei einem stehenden Fahrzeug oder einem von einem Fahrersitz aufstehenden Bedienperson automatisch die Federspeicherbremse in die Bremsstellung beaufschlagt wird, um durch eine automatisierte Betätigung der Federspeicherbremse in die Bremsstellung den Bedienkomfort für die Bedienperson zu erhöhen.

Für eine derartige automatische Feststellbremsfunktion ist es bereits bekannt, einen Bremslösedruckraum der Federspeicherbremse mittels eines elektrisch betätigten Schaltventils zu einem Behälter zu entlasten, so dass durch einen sofortigen Druckabbau ein Einfallen der Federspeicherbremse in die Bremsstellung durch die Federeinrichtung der Federspeicherbremse erzielt wird. Hierbei wird die Arbeitsmaschine mit der von der Federeinrichtung der Federspeicherbremse definierten maximalen Verzögerung und Bremskraft abgebremst.

Aus der Figur 3 der DE 10 2009 031 741 A1 sowie der Figur 5 der DE 10 2009 031 743 A1 sind gattungsgemäße Bremsteuerungssystem für als Flurförderzeuge ausgebildete Arbeitsmaschinen mit Federspeicherbremseinrichtungen bekannt. Aus diesen beiden Druckschriften ist bekannt, an der Federspeicherbremse eine automatische Feststellbremse zu erzielen, indem ein elektrisch betätigbares Schaltventil, das eine im stromlosen Zustand wirksame Sperrstellung und eine elektrisch schaltbare, den Bremslösedruckraum mit einem Behälter verbindenden Drucklosstellung aufweist, in die Drucklosstellung bestromt und angesteuert wird, um durch einen sofortigen Druckabbau des Bremslösedruckes ein Einfallen der Federspeicherbremse in die Bremsstellung zu erzielen. Aus diesen beiden Druckschriften ist ebenfalls bereits bekannt, eine Notbremsfunktion und/oder eine Sicherheitsfunktion zu erzielen, in dem ein weiteres elektrisch betätigtes Schaltventil, das während des Betriebs des Flurförderzeugs normalerweise in eine Sperrstellung bestromt ist, für die Notbremsfunktion durch gezieltes Ausschalten, beispielsweise bei Betätigung eines Tasters, bzw. für die Sicherheitsfunktion bei einem Fehlerfall, beispielsweise einem Stromausfall, in eine Druckabbaustellung zu bringen, in der der Bremslösedruckraum der Federspeicherbremse mit einer Druckhalteeinrichtung, beispielsweise einem Druckhalteventil, verbunden ist. In der Druckabbaustellung dieses Schaltventils wird durch die Druckhalteeinrichtung ein Abbau des Bremslösedruckes auf ein definiertes Druckniveau oder ein zeitverzögerter Abbau des Bremslösedruckes erzielt, so dass die Federspeicherbremse mit einem reduzierten Bremsmoment schließt. Durch diese Maßnahme wird ein Abwurf der Last durch ein zu starkes Abbremsen vermieden.

Bei Arbeitsmaschinen, insbesondere Flurförderzeugen, variiert jedoch über eine Fahrzeugbaureihe das Fahrzeuggewicht bzw. die Tragfähigkeit stark. Falls bei der fahrenden Arbeitsmaschine eine Notbremsung durch Betätigen eines entsprechenden Bedienelements mit der Federspeicherbremse durchgeführt wird, die ein festes Bremsmoment aufweist, kann jedoch mit einem derartigen Bremssteuerungssystem für die verschiedenen Arbeitsmaschinen mit unterschiedlichen Fahrzeuggewichten bzw. Hublasten und für verschiedene Lastfälle keine einheitliche Verzögerung erzielt werden. Zu beachten ist hierbei weiterhin, dass für eine dynamische Verzögerung aus der Fahrt für eine Abbremsung gesetzlich vorgeschriebene Mindestverzögerungen einzuhalten sind.

Bei bekannten Bremssteuerungssystemen ist es daher fahrzeug- bzw. lastspezifisch und beladungsspezifisch, ob die Arbeitsmaschine die vorgeschriebenen Mindestverzögerungswerte bei einer Notbremsung einhalten kann.

Der vorliegenden Erfindung liegt die Aufgabe zugrunde, ein Bremssteuerungssystem zur Verfügung zu stellen, mit dem bei einer dynamischen Notbremsung aus der Fahrt eine bestimmte, insbesondere eine gesetzlich vorgeschriebene, Mindestverzögerung unabhängig von dem Fahrzeuggewicht der Arbeitsmaschine erzielt werden kann.

Diese Aufgabe wird erfindungsgemäß dadurch gelöst, dass zur Erzielung der Notbremsfunktion das Schaltventil durch eine elektrische Ansteuerung des Schaltventils in die Drucklosstellung beaufschlagt ist, in der der Bremslösedruckraum direkt und ohne weitere Ventile mit dem Behälter verbunden ist.

Der erfindungsgemäße Gedanke besteht somit darin, im Falle einer dynamischen Notbremsung aus der Fahrt den Bremslösedruckraum der Federspeicherbremse durch eine gezielte Betätigung des Schaltventils in die Drucklosstellung direkt mit dem Behälter zu verbinden, so dass ein sofortiger und unverzögerter Druckabbau des Bremslösedruckes in dem Bremslösedruckraum erzielt wird. Hierdurch wird die Federspeicherbremse von der Federeinrichtung in die Bremsstellung beaufschlagt und die Arbeitsmaschine mit der von der Federeinrichtung der Federspeicherbremse definierten maximalen Verzögerung und Bremskraft abgebremst. Da die Federeinrichtung der Federspeicherbremse an das Fahrzeuggewicht bzw. die Tragfähigkeit und somit die Hublast eines als Flurförderzeug ausgebildeten Arbeitsmaschine angepasst ist, kann das Bremssteuerungssystem bei verschiedenen Arbeitsfahrzeugen eingesetzt werden, wobei unabhängig von dem Fahrzeuggewicht bzw. der Tragfähigkeit des Flurförderzeugs und unabhängig von dem Beladungszustand für alle Lastfälle einer beispielsweise als Flurförderzeug ausgebildeten Arbeitsmaschine auf einfache Weise sichergestellt wird, dass bei einer dynamischen Notbremsung die geforderten Mindestverzögerungswerte erzielt und eingehalten werden.

Gemäß einer bevorzugten Weiterbildung der Erfindung weist bei dem Bremssteuerungssystem die elektrisch betätigbare Bremsventileinrichtung ein zweites elektrisch betätigbares Schaltventil auf, das eine im stromlosen Zustand wirksame Sperrstellung und eine elektrisch schaltbare Druckaufbaustellung aufweist, in der der Bremslösedruckraum mit einer Druckversorgungsquelle verbunden ist, wobei zur Erzielung der Notbremsfunktion das zweite Schaltventil unbestromt ist. Für die Notbremsfunktion ist das zweite Schaltventil nicht bestromt und befindet sich in der Sperrstellung, so dass durch das bestromte und angesteuerte Schaltventil der Bremslösedruckraum mit dem Behälter verbindbar ist, um einen sofortigen und unverzögerten Druckabbau des Bremslösedruckes in dem Bremslösedruckraum zu erzielen. Mit einem derartigen zweiten Schaltventil kann die Federspeicherbremse im Betrieb der Arbeitsfahrzeugs durch Ansteuern des zweiten Schaltventils und eine Verbindung des Bremslösedruckraumes mit der Druckversorgungsquelle auf einfache Weise in die Lösestellung beaufschlagt werden.

Zweckmäßigerweise weist bei dem erfindungsgemäßen Bremssteuerungssystem die elektrisch betätigbare Bremsventileinrichtung ein drittes elektrisch betätigbares Schaltventil auf, das eine im stromlosen Zustand wirksame Druckabbaustellung aufweist, in der der Bremslösedruckraum mit einer Druckabbaueinrichtung in Verbindung steht, und eine elektrisch schaltbare Sperrstellung aufweist, wobei zur Erzielung der Notbremsfunktion und/oder einer Sicherheitsfunktion das dritte Schaltventil unbestromt ist. Hierdurch kann in der Notbremsfunktion ebenfalls erzielt werden, dass durch das bestromte und angesteuerte Schaltventil der Bremslösedruckraum mit dem Behälter verbunden ist, um einen sofortigen und unverzögerten Druckabbau des Bremslösedruckes in dem Bremslösedruckraum zu erzielen. Mit dem dritten Schaltventil kann weiterhin eine Sicherheitsfunktion erzielt werden, indem bei einem Fehlerfall, beispielsweise einem Stromausfall, oder bei der Betätigung eines Notausschalters (stromloses Fahrzeug) der Arbeitsmaschine das dritte Schaltventil in die Druckabbaustellung beaufschlagt wird, in der durch eine Verbindung des Bremslösedruckraumes mit der Druckabbaueinrichtung ein Abbau des Bremslösedruckes auf ein definiertes Niveau oder ein zeitverzögerter Abbau des Bremslösedruckes in dem Bremslösedruckraum erzielt wird, so dass die Arbeitsmaschine mit einem reduzierten Bremsmoment abgebremst wird.

Besondere Vorteile ergeben sich, wenn bei dem erfindungsgemäßen Bremssteuerungssystem gemäß einer bevorzugten Weiterbildung der Erfindung zur Betätigung der elektrisch betätigbaren Bremsventileinrichtung eine elektronische Steuereinrichtung vorgesehen ist, die eingangsseitig mit einem Schalter als Bedienelement versehen ist, das eine Betätigungsstellung für die Notbremsfunktion aufweist. Bei bekannten Bremssteuerungssystem ist in der Regel ein Taster zur Betätigung der Federspeicherbremse, insbesondere der Funktionen manuelle Feststellbremse und Notbremsfunktion vorhanden, bei dessen Betätigung, insbesondere durch Drücken des Tasters, die Bedienperson nicht eindeutig erkennen kann, ob eine Notbremsung oder eine manuellen Feststellbremsung aktiviert wurde. Ein Schalter als Bedienelement hat gegenüber einem Taster den Vorteil, dass dieser für die Notbremsung mit einer eindeutigen Schaltstellung versehen werden kann, so dass die Bedienperson eindeutig eine dynamische Notbremsung betätigen und deren Aktivierung erkennen kann.

Die Betätigungsstellung des Schalters kann hierbei als gemeinsame Schaltstellung für die Notbremsfunktion und eine manuelle Feststellbremsfunktion ausgebildet sein. Alternativ ist möglich, dass der Schalter eine weitere Schaltstellung für eine manuelle Feststellbremsstellung aufweist. Ein Schalter mit einer gemeinsamen Schaltstellung bzw. getrennten Schaltstellungen für die Notbremsfunktion und die manuelle Feststellbremsfunktion ermöglicht der Bedienperson der Arbeitsmaschine eine eindeutige optische Rückmeldung, ob eine Notbremsung oder eine manuelle Feststellbremse betätigt wurde.

Gemäß einer Ausgestaltungsfunktion der Erfindung ist bei dem erfindungsgemäßen Bremssteuerungssystem mittels der Bremseinrichtung eine automatische und/oder manuelle Feststellbremsfunktion erzielbar. Die Feststellbremsfunktion ist hierbei erzielbar, wenn das Schaltventil durch eine elektrische Ansteuerung des Schaltventils in die Drucklosstellung beaufschlagt ist, und das zweite Schaltventil unbestromt ist. Durch Ansteuern und Bestromen des Schaltventils kann ein sofortiger Druckabbau des in dem Bremslösedruckraum anstehenden Bremslösedruckes erzielt werden, so dass ein sofortiges Einfallen der Federspeicherbremse in die Bremsstellung erzielt werden kann. Mit der Funktion einer automatischen Feststellbremse kann eine Fahrerunterstützung auf einfache Weise erzielt werden, indem beispielsweise bei einer stehenden Arbeitsmaschine oder einem Verlassen des Fahrerarbeitsplatzes die Federspeicherbremse automatisch in die Bremsstellung beaufschlagt wird. Bei dem Bremssteuerungssystem mit den elektrischen betätigten Schaltventilen kann eine automatische Feststellbremse auf einfache Weise erzielt werden. Das dritte Schaltventil kann hierbei bestromt oder unbestromt sein.

Zur Erzielung der Sicherheitsfunktion sind das Schaltventil und das zweite Schaltventil zweckmäßigerweise unbestromt und befinden sich somit in den Sperrstellungen. Mit dem dritten Schaltventil, das bei einem Fehlerfall, beispielsweise einem Stromausfall, oder bei der Betätigung eines Notausschalters (stromloses Fahrzeug) ebenfalls unbestromt ist und somit in die Druckabbaustellung beaufschlagt wird, kann somit durch eine Verbindung des Bremslösedruckraumes mit der Druckabbaueinrichtung ein Abbau des Bremslösedruckes auf ein definiertes Niveau oder ein zeitverzögerter Abbau des Bremslösedruckes in dem Bremslösedruckraum erzielt wird, so dass die Arbeitsmaschine mit einem reduzierten Bremsmoment abgebremst wird und ein Abwurf einer Last vermieden werden kann.

Gemäß einer zweckmäßigen Ausgestaltungsform der Erfindung arbeitet die Federspeicherbremse zusätzlich als Betriebsbremse, wobei dem Bremslösedruckraum ein Bremsventil zugeordnet ist. Bei einer Betätigung des Bremsventils kann durch einen kontrollierten Abbau des in dem Bremslösedruckraum anstehenden Bremslösedruckes mit geringem zusätzlichen Bauaufwand die Federspeicherbremse um die Funktion einer Betriebsbremse erweitert werden.

Die Federspeicherbremse kann gemäß einer weiteren Ausgestaltungsform der Erfindung als Betriebsbremse arbeiten, wenn alternativ oder zusätzlich die Federspeicherbremse hydraulisch mittels eines in einem Bremsdruckraum anstehenden Bremsdruckes in Richtung einer Bremsstellung beaufschlagbar ist, wobei dem Bremsdruckraum ein Bremsventil zugeordnet ist. Der in dem Bremsdruckraum anstehende Bremsdruck wirkt hierbei dem in dem Bremslösedruckraum anstehenden Bremslösedruck entgegen, so dass durch eine Übersteuerung die Federspeicherbremse durch den mittels des Bremsventils erzeugten Bremsdruck in Richtung der Bremsstellung beaufschlagt werden kann.

Besondere Vorteile sind erzielbar bei der Verwendung des erfindungsgemäßen Bremssteuerungssystem in einer Fahrzeugflotte umfassend verschiedene Arbeitsmaschinen mit unterschiedlichen Einsatzgewichten, insbesondere verschiedene Flurförderzeuge mit unterschiedlichen Tragfähigkeiten. Mit dem erfindungsgemäßen Bremssteuerungssystem können bei einer Fahrzeugflotte, insbesondere einer Baureihe von Flurförderzeugen mit Flurförderzeugen unterschiedlichen Tragfähigkeiten, mit einer Variante des Bremssteuerungsstems für die hinsichtlich der Tragfähigkeit unterschiedlichen Flurförderzeuge für alle Lastfälle bei einer Notbremsung aus der Fahrt die vorgeschriebenen Mindestverzögerungswerte erzielt und eingehalten werden, so dass sich ein geringer Bauaufwand für die unterschiedlichen Flurförderzeuge ergibt.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform der Erfindung mit einer als Parkbremse ausgebildeten Bremseinrichtung,
- Figur 2: eine zweite Ausführungsform der Erfindung mit einer als Parkbremse und Betriebsbremse ausgebildeten Bremseinrichtung in einer Ein-Kreis-Ausführung und
- Figur 3: eine dritte Ausführungsform der Erfindung mit einer als Parkbremse und Betriebsbremse ausgebildeten Bremseinrichtung in einer Zwei-Kreis-Ausführung.

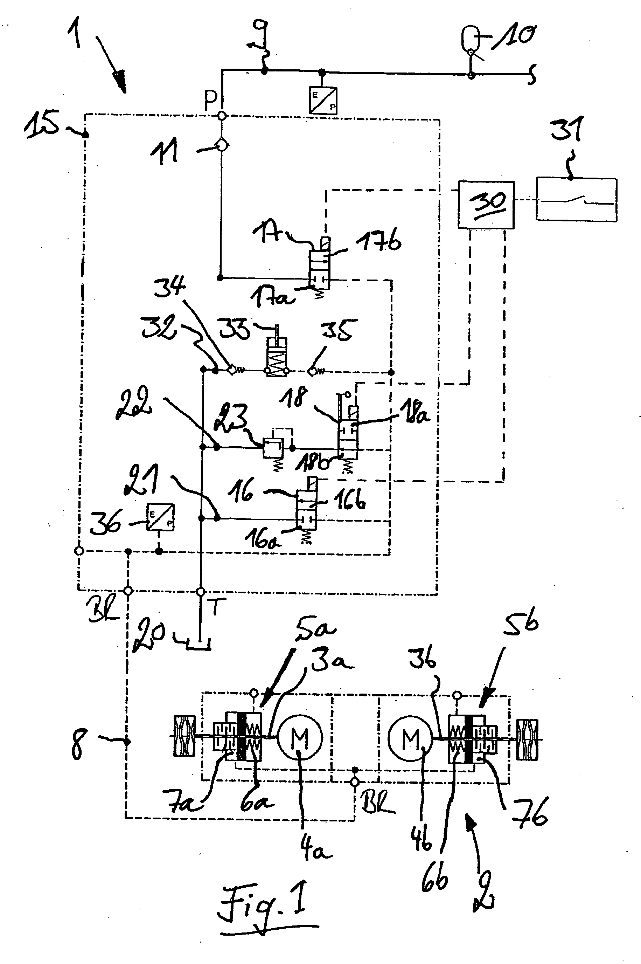

In der Figur 1 ist ein Bremssteuerungssystem 1 einer Arbeitsmaschine, beispielsweise eines batterie-elektrisch betriebenen Gabelstaplers, mit einer als Federspeicherbremse ausgebildeten Bremseinrichtung 2 beschrieben, die eine Feststellbremse bildet. Gezeigt ist eine Antriebsachse mit zwei angetrieben Rädern, die über zwei Radwellen 3a und 3b verfügt, die jeweils von einem Radmotor 4a bzw. 4b antreibbar sind. Die Radwellen 3a, 3b sind durch jeweils eine Bremseinrichtung abbremsbar und arretierbar, die als hydraulisch lösbare Federspeicherbremse 5a bzw. 5b ausgebildet ist. Bevorzugt sind die Federspeicherbremsen 5a, 5b als ölgekühlte Lamellenbremsen ausgebildet.

Die Federspeicherbremsen 5a, 5b sind jeweils von einer Federeinrichtung 6a, 6b in eine die Bremsstellung bildende Schließstellung beaufschlagt, wobei die Kraft der Federeinrichtung eine maximale Bremskraft und somit eine maximale Verzögerung definiert. Zum Lösen der Federspeicherbremsen 5a, 5b ist jeweils ein Bremslösedruckraum 7a bzw. 7b vorgesehen, der bei einer Druckbeaufschlagung mit einem Bremslösedruck der Kraft der Federeinrichtung 6a, 6b entgegenwirkt, um die Federspeicherbremse 5a, 5b in eine Lösestellung zu beaufschlagen. Die Bremslösedruckräume 7a, 7b sind mit einer gemeinsamen hydraulischen Bremsleitung 8 verbunden, die an eine Druckversorgungsleitung 9 einer nicht mehr näher dargestellten Druckversorgungseinrichtung anschließbar ist. Der Druckversorgungsleitung 9 kann ein Speicher 10 zugeordnet sein. Ferner ist in der Druckversorgungsleitung 9 stromab des Speichers 10 ein in Richtung zu den Bremslösedruckräumen 7a, 7b öffnendes Rückschlagventil 11 angeordnet.

Zur Steuerung der Federspeicherbremse 6a, 6b ist den Bremslösedruckräumen 7a, 7b eine elektrisch betätigbare Bremsventileinrichtung 15 vorgeschaltet.

Die Bremsventileinrichtung 15 umfasst drei elektrisch betätigbare Schaltventile 16, 17, 18, die bevorzugt als Sitzventile ausgebildet sind und den Bremslösedruckräumen 7a bzw. 7b vorgeschaltet sind.

Das Schaltventil 16 ist in einer die Bremsleitung 8 mit einem Behälter 20 verbindenden Steuerleitung 21 angeordnet und als Schaltventil mit einer Sperrstellung 16a und einer als Durchflussstellung ausgebildeten Drucklosstellung 16b ausgebildet. In der Steuerleitung 21 und somit der Verbindung des Bremslösedruckraumes 7a, 7b mit dem Behälter 20 sind zusätzlich zu dem Schaltventil 16 keine weiteren drosselnden Ventileinrichtungen angeordnet. Das Schaltventil 16 ist von einer Feder in die Sperrstellung 16a beaufschlagt und durch eine elektrische Betätigungseinrichtung, beispielsweise einen Schaltmagneten, in die Drucklosstellung 16b beaufschlagbar. Das Schaltventil 16 befindet sich somit im stromlosen Zustand in der Sperrstellung 16a. Bei einer Ansteuerung wird das Schaltventil 16 in die Drucklosstellung 16b betätigt, in der die Bremslösedruckräume 7a, 7b über die Steuerleitung 21 direkt und ohne Zwischenschaltung weiterer Ventileinrichtungen mit dem Behälter 20 verbunden sind.

Ein zweites Schaltventil 17 der Bremsventileinrichtung 15 ist eingangsseitig an die Druckversorgungsleitung 9 und ausgangsseitig an die Bremsleitung 8 angeschlossen. Das Schaltventil 17 weist eine Sperrstellung 17a und eine als Durchflussstellung ausgebildete Druckaufbaustellung 17b. Das Schaltventil 17 ist von einer Feder in die Sperrstellung 17a beaufschlagt und durch eine elektrische Betätigungseinrichtung, beispielsweise einen Schaltmagneten, in die Druckaufbausstellung 17b beaufschlagbar. Das Schaltventil 17 befindet sich somit im stromlosen Zustand in der Sperrstellung 17a. Bei einer Ansteuerung wird das Schaltventil 17 in die Druckaufbaustellung 17b beaufschlag, in der die Bremslösedruckräume 7a, 7b mit der Druckversorgungseinrichtung verbunden sind.

Ein drittes Schaltventil 18 der Bremsventileinrichtung 15 ist in einer weiteren die Bremsleitung 8 mit einem Behälter 20 verbindenden Steuerleitung 22 angeordnet und als Schaltventil mit einer Sperrstellung 18a und einer als Durchflussstellung ausgebildeten Druckabbaustellung 18b ausgebildet. Das Schaltventil 18 ist von einer Feder in die Druckabbaustellung 18b beaufschlagt und durch eine elektrische Betätigungseinrichtung, beispielsweise einen Schaltmagneten, in die Sperrstellung 18a beaufschlagbar. Das Schaltventil 18 befindet sich somit im stromlosen Zustand in der Druckabbaustellung 18b und wird bei einer Ansteuerung in die Sperrstellung 18a beaufschlagt. In der Steuerleitung 22 ist stromab des Schaltventils 18 eine Druckabbaueinrichtung 23 angeordnet. Die Druckabbaueinrichtung 23 ist im dargestellten Ausführungsbeispiel als Druckventil, beispielsweise Druckbegrenzungsventil, ausgebildet. Die Druckabbaueinrichtung 23 kann jedoch ebenfalls von einer Blende, einer Drossel, einem Druckminderventil, einem Drosselventil oder einem Druckspeicher gebildet werden. Zudem ist eine elektrische Verstellbarkeit der Druckabbaueinrichtung 23 möglich, beispielsweise in Form eines elektrisch ansteuerbaren Proportional-Druckminderventils oder eines elektrisch ansteuerbaren Proportional-Druckbegrenzungsventils bzw. einer elektrisch verstellbaren Blende oder Drossel.

Die Schaltventile 16, 17, 18 der Bremsventileinrichtung 15 sind mittels einer elektronischen Steuereinrichtung 30 betätigbar, die eingangsseitig mit einem als Schalter 31 ausgebildeten Betätigungsmittel als Bedienelement in Verbindung steht. Der Schalter 31 weist hierbei bevorzugt eine gemeinsame Schaltstellung für eine Notbremsung und manuelle Feststellbremsung auf. Es ist ebenfalls möglich, getrennte Schaltstellungen für die Notbremsung und die manuelle Feststellbremsung vorzusehen.

Zudem können weitere, nicht mehr dargestellte Sensoreinrichtungen eingangsseitig mit der Steuereinrichtung 30 in Verbindung stehen, beispielsweise ein das Vorhandensein der Bedienperson auf einem Fahrerarbeitsplatz, beispielsweise einem Fahrersitz, erfassender Belegungsschalter oder ein die Fahrzeuggeschwindigkeit erfassender Sensor, um eine automatisierte Betätigung der Federspeicherbremse 5a, 5b im Sinne einer automatisch aktivierten Feststellbremse zu erzielen.

Um eine stehende Arbeitsmaschine im stromlosen Zustand abschleppen zu können, ist in einer den Behälter 20 mit der Bremsleitung 8 verbindenden Leitung 32 eine manuell betätigbare Handpumpe 33 zwischen zwei zum Behälter 20 schließenden Rückschlagventilen 34, 35 angeordnet.

Zum Lösen der Feststellbremse 5a, 5b ist das Schaltventil 16 unbestromt und befindet sich in der Sperrstellung 16a, in der die Verbindung der Bremslösedruckräume 7a, 7b zum Behälter 20 unterbrochen ist. Durch Bestromen des zweiten Schaltventils 17 sowie des dritten Schaltventils 18 können die Bremslösedruckräume 7a, 7b hydraulisch beaufschlagt und dadurch eine der Federkraft der Federeinrichtungen 6a, 6b entgegengesetzte Kraft erzeugt werden, wodurch die Federspeicherbremsen 5a, 5b in die Lösestellung beaufschlagt und somit gelöst werden, was einer geöffneten Feststellbremse entspricht.

Bei einem ausreichenden Bremslösedruck, der von einem der Bremsleitung 8 zugeordneten Drucksensor 36 erfasst wird, der auf nicht näher dargestellte Weise mit der elektronischen Steuereinrichtung 30 in Verbindung steht, kann die Bestromung des zweiten Schaltventils 17 beendet werden, so dass bei gelöster Feststellbremse, beispielsweise während der Fahrt der Arbeitsmaschine nur noch das dritte Schaltventil 18 bestromt ist.

Die als Feststellbremse arbeitende Federspeicherbremse 5a, 5b kann im Sinne einer automatischen Feststellbremse oder einer durch eine Betätigung des Schalters 31 in die Schaltstellung für eine manuelle Feststellbremsung im Sinne einer manuellen Feststellbremse in die Bremsstellung beaufschlagt und somit geschlossen werden, wenn das zweite Schaltventil 17 und gegebenenfalls zusätzlich das dritte Schaltventil 18 nicht mehr bestromt werden und das Schaltventil 16 bestromt wird. Das Schaltventil 16 sorgt im angesteuerten Zustand in der Drucklosstellung 16b für einen sofortigen Druckabbau des Bremslösedruckes in den Bremslösedruckräumen 7a, 7b der Federspeicherbremsen 5a, 5b, so dass die Federeinrichtungen 6a, 6b die Federspeicherbremsen 5a, 5b in die Bremsstellung beaufschlagt und die Feststellbremse schließt.

Kommt es bei fahrender Arbeitsmaschine zu einem Stromausfall, beispielsweise infolge eines sich lösenden Batteriesteckers oder einer leeren Traktionsbatterie, so sind alle drei Schaltventile 16, 17, 18 unbestromt. Das Schaltventil 16 und das zweite Schaltventil 17 schalten somit in Sperrstellung 16a bzw. 17a und das dritte Schaltventil 18 in die Druckabbaustellung 18b, in der durch einen Druckabbau auf ein definiertes Niveau oder einem zeitverzögerten Druckabbau über die Druckabbaueinrichtung 23 in dem Bremslösedruckraum 7a bzw. 7b der Federspeicherbremsen 5a , 5b diese zunächst mit einem reduzierten Bremsmoment schließen. Durch dieses reduzierte Bremsmoment kann in dieser Sicherheitsfunktion bei einer als Flurförderzeug ausgebildeten Arbeitsmaschine bei einer Abbremsung infolge eines stromlosen Fahrzeugs ein Lastabwurf der transportierten Last vermieden werden.

Für den Abschleppbetrieb kann das dritte Schaltventil 18 von Hand in die Sperrstellung 18a betätigt werden. Durch Betätigen der Handpumpe 33 kann dabei die Federspeicherbremse 5a, 5b in die Lösestellung beaufschlagt werden.

Erfindungsgemäß wird bei einer durch eine entsprechenden Betätigung des Schalters 31 in die Schaltstellung für eine Notbremsung und somit bei einer dynamischen Notbremsung aus der Fahrt der Arbeitsmaschine das Schaltventil 16 durch eine Bestromung in die Drucklosstellung 16b beaufschlagt. Die Bestromung des zweiten Schaltventils 17 wird hierbei beendet. Das dritte Schaltventil 18 kann hierbei zweckmäßigerweise ebenfalls nicht weiter bestromt werden. Durch das in die Drucklosstellung 16b angesteuerte Schaltventil 16 wird hierbei ein sofortigen Druckabbau in dem Bremslösedruckraum 7a, 7b erzielt, so dass die Federspeicherbremsen 5a, 5b durch die Kraft der Federeinrichtungen 6a, 6b in die Bremsstellung beaufschlagt werden und die Arbeitsmaschine mit der von der Federeinrichtung 6a, 6b definierten maximalen Bremskraft und somit mit dem maximalen Bremsmoment abgebremst werden.

Durch diese Beaufschlagung der Federspeicherbremse 5a, 5b in die Bremsstellung bei einer dynamischen Notbremsung aus der Fahrt der Arbeitsmaschine können die vorgeschriebenen Mindestverzögerungswerte unabhängig von dem Fahrzeuggewicht und der Hublast für alle Lastfälle eingehalten werden, so dass das erfindungsgemäße Bremssteuerungssystem in einer Fahrzeugflotte, die verschiedenen Arbeitsmaschinen mit unterschiedlichen Fahrzeuggewichten umfasst, insbesondere bei einer Baureihe von Flurförderzeugen mit unterschiedlichen Hublasten und Tragfähigkeiten, eingesetzt und verwendet werden kann ohne Änderungen an der Bremsventileinrichtung 15 zu erfordern.

Sofern der Schalter 31 mit unterschiedlichen Schaltstellungen für die Notbremsung und für die manuelle Feststellbremsung versehen ist, kann hierbei eine eindeutige optische Fahrerrückmeldung erzielt werden, ob die Notbremsung aktiviert wurde oder eine manuelle Betätigung der Feststellbremse erfolgte. Sofern der Schalter 31 mit nur einer Schaltstellung für die Notbremsung und die manuelle Feststellbremsung versehen ist, kann ebenfalls eine optische Fahrerrückmeldung erzielt werden, ob einer der beiden Funktionen aktiviert wurde. Da bei einer stromlosen Arbeitsmaschine weiterhin keine Anzeige über einen Display oder zusätzliche Lampen möglich ist, die die Funktionen oder die Betätigung der Federspeicherbremse visualisieren können, kann mit einem derartigen Schalter 31 auch bei stromloser Arbeitsmaschine eine eindeutige Fahrerrückmeldung erfolgen.

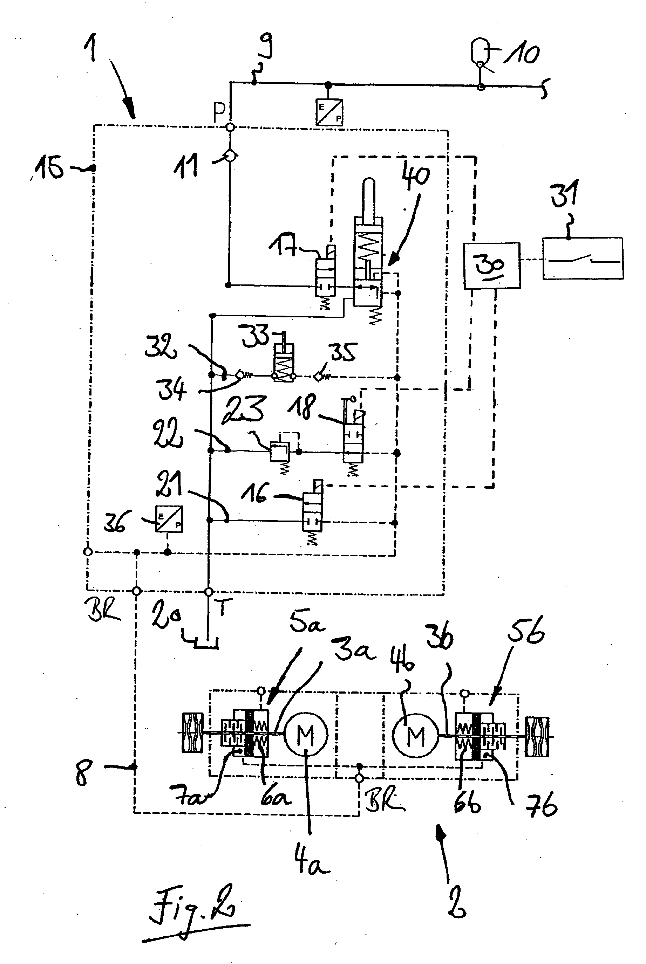

In der Figur 2 ist ein Bremssteuerungssystem 1 einer als Federspeicherbremse 2 ausgebildeten Bremseinrichtung beschrieben, die eine Betriebsbremse und eine Feststellbremse bildet und somit neben den bereits beschriebenen Funktionen zusätzlich die Funktion einer Betriebsbremse zum dosierten Abbremsen der Arbeitsmaschine aufweist. Das Bremssteuerungssystem entspricht hierbei, insbesondere bezüglich des Aufbaus und der Funktion der Bremsventileinrichtung 15, dem in den Figur 1 dargestellten Aufbau.

Die Federspeicherbremse 2 ist hierbei als Ein-Kreis-Bremssystem ausgebildet, wobei zusätzlich zu der Figur 1 ein Bremsventil 40 stromab des zweiten Schaltventils 17 der Bremsventileinrichtung 15 in der Bremsleitung 8 angeordnet ist. Das Bremsventil 40 kann hierbei Bestandteil der Bremsventileinrichtung 15 sein. Das Bremsventil 40 ist im vorliegenden Ausführungsbeispiel als steuerbares Proportional-Druckminderventil mit einer fallenden Kennlinie ausgebildet. Das Bremsventil 40 ist durch ein nicht näher dargestelltes Betätigungsorgan, beispielsweise ein Bremspedal oder durch die Pedale einer sogenannten Doppelpedalsteuerung, bei der jeweils ein Fahr-/Bremspedal der Vorwärtsfahrtrichtung und ein Fahr-/Bremspedal der Rückwärtsfahrtrichtung zugeordnet ist, betätigbar. Bei einer Betätigung des Betätigungsorgans wird hierbei das Bremsventil 40 zunehmend in eine die Bremsleitung 8 mit dem Behälter 20 verbindenden Stellung beaufschlagt, so dass durch einen dosierten Abbau des in der Bremsleitung 8 anstehenden Bremslösedruckes die Federspeicherbremse 5a, 5b zur Erzielung eines Betriebsbremsfunktion dosiert in die Bremsstellung beaufschlagt wird.

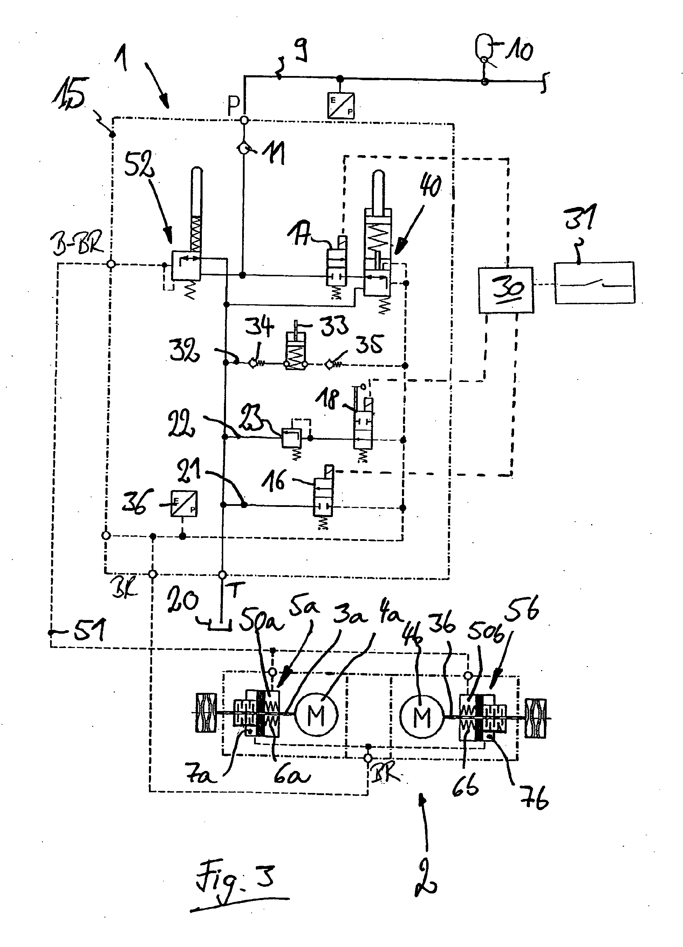

In der Figur 3 ist eine Ausführungsform eines Bremssteuerungssystem mit einer als Feststellbremse und als Betriebsbremse arbeitenden Federspeicherbremseinrichtung 5a, 5b dargestellt, die als Zwei-Kreis-Bremssystem ausgebildet ist. Das Bremssteuersystem entspricht hierbei, insbesondere bezüglich des Aufbaus und der Funktion der Bremsventileinrichtung 15, dem in den Figuren 1 und 2 dargestellten Aufbau.

Ergänzend zu dem in der Figur 2 dargestellten Ausführungsform verfügt die Federspeicherbremse 5a, 5b zusätzlich zu den Bremslösedruckräumen 7a bzw. 7b über jeweils einen Bremsdruckraum 50a bzw. 50b, der gleichsinnig mit der Federeinrichtung 6a, 6b in Richtung der Sperrstellung und somit der Bremsstellung wirkt. In dem Bremsdruckraum 50a, 50b ist hierbei bevorzugt die Federeinrichtung 6a, 6b angeordnet. Die Bremsdruckräume 50a, 50b sind an eine Bremsdruckleitung 51 angeschlossen, die unter Zwischenschaltung eines zweiten Bremsventils 52 an die Druckversorgungsleitung 9 angeschlossen ist. Das zweite Bremsventil 52 kann hierbei Bestandteil der Bremsventileinrichtung 15 sein. Das zweite Bremsventil 52 ist gemäß dem vorliegenden Ausführungsbeispiel als Proportional-Druckminderventil mit einer steigenden Kennlinie ausgebildet ist. Die beiden Bremsventile 40, 52 sind bevorzugt von einem gemeinsamen Betätigungsorgan betätigbar. Bei einer Betätigung des nicht näher dargestellten Betätigungsorgans wird das Bremsventil 52 zunehmend in eine die Druckversorgungsleitung 9 mit der Bremsdruckleitung 51 verbindenden Stellung beaufschlagt, wodurch ein steuerbarer Bremsdruck erzeugt wird, der in dem Bremsdruckraum 50a, 50b ansteht und dem in dem Bremslösedruckraum 7a, 7b anstehenden Bremslüftdruck entgegenwirkt und somit diesen übersteuert. Durch den dosierbaren Bremsdruck in dem Bremsdruckraum 50a, 50b kann hierbei im Sinne einer Übersteuerung die Federspeicherbremse 5a, 5b in die Bremsstellung beaufschlagt werden, um die Betriebsbremsfunktion zu erzielen.

Das gemeinsame Betätigungsorgan der beiden Bremsventile 40, 52 weist hierbei bevorzugt einen ersten Betätigungsbereich auf, in dem ausschließlich das zweite Bremsventil 52 betätigt wird, und daran anschließend, einen zweiten Betätigungsbereich, in dem zusätzlich das Bremsventil 40 betätigt wird.

In einer weiteren Ausführung können die beiden Bremsventile 40 und 52 parallel betätigt werden.

## Patentansprüche

1. Bremssteuerungssystem einer mobile Arbeitsmaschinen, insbesondere Flurförderzeug, mit einer als Federspeicherbremse ausgebildeten Bremseinrichtung (2), insbesondere einer als Feststellbremse arbeitenden Bremseinrichtung, die hydraulisch mittels eines in einem Bremslösedruckraum (7a; 7b) anstehenden Bremslösedruckes in Richtung einer Lösestellung beaufschlagbar ist, wobei zur Steuerung der Bremseinrichtung (2) dem Bremslösedruckraum (7a; 7b) eine elektrisch betätigbare Bremsventileinrichtung (15) vorgeschaltet ist, die ein elektrisch betätigbares Schaltventil (16) aufweist, das eine im stromlosen Zustand wirksame Sperrstellung (16a) und eine elektrisch schaltbare, den Bremslösedruckraum (7a; 7b) mit einem Behälter (20) verbindenden Drucklosstellung (16b) aufweist, und mittels der Bremseinrichtung (2) eine von einer Bedienperson ausgelöste Notbremsfunktion erzielbar ist, **dadurch gekennzeichnet, dass** zur Erzielung der Notbremsfunktion das Schaltventil (16) durch eine elektrische Ansteuerung des Schaltventils (16) in die Drucklosstellung (16b) beaufschlagt ist, in der der Bremslösedruckraum (7a; 7b) direkt und ohne weitere Ventile mit dem Behälter (20) verbunden ist.

2. Bremssteuerungssystem nach Anspruch 1, **dadurch gekennzeichnet, dass** die elektrisch betätigbare Bremsventileinrichtung (15) ein zweites elektrisch betätigbares Schaltventil (17) aufweist, das eine im stromlosen Zustand wirksame Sperrstellung (17a) und eine elektrisch schaltbare Druckaufbaustellung (17b) aufweist, in der der Bremslösedruckraum (7a; 7b) mit einer Druckversorgungsquelle verbunden ist, wobei zur Erzielung der Notbremsfunktion das zweite Schaltventil (17) unbestromt ist.

3. Bremssteuerungssystem nach Anspruch 1 oder 2, **dadurch gekennzeichnet, dass** die elektrisch betätigbare Bremsventileinrichtung (15) ein drittes elektrisch betätigbares Schaltventil (18) aufweist, das eine im stromlosen Zustand wirksame Druckabbaustellung (18b) aufweist, in der der Bremslösedruckraum (7a; 7b) mit einer Druckabbaueinrichtung (23) in Verbindung steht, und eine elektrisch schaltbare Sperrstellung (18a) aufweist, wobei zur Erzielung der Notbremsfunktion und/oder einer Sicherheitsfunktion das dritte Schaltventil (18) unbestromt ist.

4. Bremssteuerungssystem nach einem der Ansprüche 1 bis 3, dadurch gekenntzeichnet, dass zur Betätigung der elektrisch betätigbare Bremsventileinrichtung (15) eine elektronische Steuereinrichtung (30) vorgesehen ist, die eingangsseitig mit einem Schalter (31) als Bedienelement versehen ist, das eine Betätigungsstellung für die Notbremsfunktion aufweiset.

5. Bremssteuerungssystem nach Anspruch 4, **dadurch gekennzeichnet, dass** die Betätigungsstellung als gemeinsame Schaltstellung für die Notbremsfunktion und eine manuelle Feststellbremsfunktion ausgebildet ist.

6. Bremssteuerungssystem nach Anspruch 4, **dadurch gekennzeichnet, dass** der Schalter (31) eine optionale weitere Schaltstellung für eine manuelle Feststellbremsfunktion aufweist.

7. Bremssteuerungssystem nach einem der Ansprüche 1 bis 6, **dadurch gekennzeichnet, dass** mittels der Bremseinrichtung eine automatische und/oder manuelle Feststellbremsfunktion erzielbar ist.

8. Bremssteuerungssystem nach Anspruch 7, **dadurch gekennzeichnet, dass** zur Erzielung der Feststellbremsfunktion das Schaltventil (16) durch eine elektrische Ansteuerung des Schaltventils (16) in die Drucklosstellung (16b) beaufschlagt ist und das zweite Schaltventil (17) unbestromt ist.

9. Bremssteuerungssystem nach einem der Ansprüche 3 bis 8, **dadurch gekennzeichnet, dass** zur Erzielung der Sicherheitsfunktion das Schaltventil (16) und das zweite Schaltventil (17) unbestromt sind.

10. Bremssteuerungssystem nach einem der Ansprüche 1 bis 9, **dadurch gekennzeichnet, dass** die Federspeicherbremse als Betriebsbremse arbeitet, wobei dem Bremslösedruckraum (7a; 7b) ein Bremsventil (40) zugeordnet ist.

11. Bremssteuerungssystem nach einem der Ansprüche 1 bis 10, **dadurch gekennzeichnet, dass** Federspeicherbremse (5a; 5b) als Betriebsbremse arbeitet, die hydraulisch mittels eines in einem Bremsdruckraum (50a; 50b) anstehenden Bremsdruckes in Richtung einer Bremsstellung beaufschlagbar ist, wobei dem Bremsdruckraum (50a; 50b) ein Bremsventils (52) zugeordnet ist.

12. Verwendung des Bremssteuerungssystems nach einem der vorangegangenen Ansprüche in einer Fahrzeugflotte umfassend verschiedene Arbeitsmaschinen mit unterschiedlichen Einsatzgewichten, insbesondere verschiedene Flurförderzeuge mit unterschiedlichen Tragfähigkeiten.

## Claims

1. Brake control system of a mobile work machine, in particular industrial truck, having a brake device (2) which is embodied as a spring-loaded brake, in particular a brake device which operates as a parking brake and which can be acted on hydraulically in the direction of a release position by means of a brake release pressure which is present in a brake release pressure space (7a; 7b), wherein, in order to control the brake device (2), a brake valve device (15) which can be activated electrically is connected upstream of the brake release pressure space (7; 7b), said brake valve device (15) having a switching valve (16) which can be activated electrically and which has an off position (16a) which is effective in the currentless state and an electrically switchable pressureless position (16b) which connects the brake release pressure space (7a; 7b) to a container (20), and an emergency braking function which can be triggered by an operator can be brought about by means of the brake device (2),
**characterized in that** in order to bring about the emergency braking function the switching valve (16) is moved, by electrical actuation of the switching valve (16), into the pressureless position (16b) in which the brake release pressure space (7a; 7b) is connected directly, and without further valves, to the container (20).

2. Brake control system according to Claim 1, **characterized in that** the brake valve device (15) which can be activated electrically has a second switching valve (17) which can be activated electrically and which has an off position (17a) which is effective in the currentless state and an electrically switchable pressure build-up position (17b) in which the brake release pressure space (7a; 7b) is connected to a pressure supply source, wherein in order to bring about the emergency braking function the second switching valve (17) is non-energized.

3. Brake control system according to Claim 1 or 2, **characterized in that** the brake valve device (15) which can be activated electrically has a third switching valve (18) which can be activated electrically and which has a pressure build-up position (18b) which is effective in the currentless state and in which the brake release pressure space (7a; 7b) is connected to a pressure reduction device (23) and has an electrically switchable off position (18a), wherein in order to bring about the emergency braking function and/or a safety function the third switching valve (18) is non-energized.

4. Brake control system according to one of Claims 1 to 3, **characterized in that** in order to activate the brake valve device (15) which can be activated electrically an electronic control device (30) is provided which is provided on the input side with a switch (31) as an operator control element which has an activation position for the emergency braking function.

5. Brake control system according to Claim 4, **characterized in that** the activation position is embodied as a common switched position for the emergency braking function and a manual parking brake function.

6. Brake control system according to Claim 4, **characterized in that** the switch (31) has an optional further switched position for a manual parking brake function.

7. Brake control system according to one of Claims 1 to 6, **characterized in that** an automatic and/or manual parking brake function can be brought about by means of the brake device.

8. Brake control system according to Claim 7, **characterized in that** in order to bring about the parking brake function the switching valve (16) is moved, by electrical actuation of the switching valve (16), into the pressureless position (16b) and the second switching valve (17) is non-energized.

9. Brake control system according to one of Claims 3 to 8, **characterized in that** in order to bring about the safety function the switching valve (16) and the second switching valve (17) are non-energized.

10. Brake control system according to one of Claims 1 to 9, **characterized in that** the spring-loaded brake operates as a service brake, wherein a brake valve (40) is assigned to the brake release pressure space (7a; 7b).

11. Brake control system according to one of Claims 1 to 10, **characterized in that** the spring-loaded brake (5a; 5b) operates as a service brake which can be acted on hydraulically in the direction of a braking position by means of a brake pressure present in a brake pressure space (50a; 50b), wherein a brake valve (52) is assigned to the brake pressure space (50a; 50b).

12. Use of the brake control system according to one of the preceding claims in a vehicle fleet, comprising a variety of work machines with different operating weights, in particular different industrial trucks with different load-bearing capacities.

## Revendications

1. Système de commande de freinage d'une machine de travail mobile, en particulier d'un chariot de manutention, comprenant un dispositif de freinage (2) réalisé sous forme de frein à accumulateur à ressort, en particulier un dispositif de freinage fonctionnant en tant que frein de stationnement qui peut être sollicité hydrauliquement au moyen d'une pression de déclenchement de freinage s'appliquant dans un espace de pression de déclenchement de freinage (7a ; 7b) dans la direction d'une position de déclenchement, un dispositif de soupape de freinage (15) pouvant être actionné de manière électrique étant monté en amont de l'espace de pression de déclenchement de freinage (7a ; 7b) en vue de la commande du dispositif de freinage (2), lequel dispositif de soupape de freinage présente une soupape de commutation à commande électrique (16), laquelle présente une position de verrouillage (16a) active dans l'état non alimenté en courant et une position sans pression (16b) commutable électriquement, reliant l'espace de pression de déclenchement de freinage (7a ; 7b) à un récipient (20), et une fonction de freinage d'urgence déclenchée par un opérateur pouvant être obtenue au moyen du dispositif de freinage (2), **caractérisé en ce que** pour obtenir la fonction de freinage d'urgence, la soupape de commutation (16) est sollicitée dans la position sans pression (16b) par une commande électrique de la soupape de commutation (16), dans laquelle position sans pression l'espace de pression de déclenchement de freinage (7a ; 7b) est connecté directement et sans autre soupape au récipient (20).

2. Système de commande de freinage selon la revendication 1, **caractérisé en ce que** le dispositif de soupape de freinage (15) à commande électrique présente une deuxième soupape de commutation (17) à commande électrique, laquelle présente une position de verrouillage (17a) active dans l'état non alimenté en courant et une position d'augmentation de pression (17b) commutable électriquement, dans laquelle l'espace de pression de déclenchement de freinage (7a ; 7b) est connecté à une source d'alimentation en pression, la deuxième soupape de commutation (17) n'étant pas alimentée en courant pour obtenir la fonction de freinage d'urgence.

3. Système de commande de freinage selon la revendication 1 ou 2, **caractérisé en ce que** le dispositif de soupape de freinage (15) à commande électrique présente une troisième soupape de commutation (18) à commande électrique qui présente une position de diminution de pression (18b) active dans l'état non alimenté en courant, dans laquelle l'espace de pression de déclenchement de freinage (7a ; 7b) est en liaison avec un dispositif de diminution de pression (23), et présente une position de verrouillage commutable électriquement (18a), la troisième soupape de commutation (18) n'étant pas alimentée en courant pour obtenir la fonction de freinage d'urgence et/ou une fonction de sécurité.

4. Système de commande de freinage selon l'une quelconque des revendications 1 à 3, **caractérisé en ce que** pour l'actionnement du dispositif de soupape de freinage (15) à commande électrique, il est prévu un dispositif de commande électronique (30) qui est pourvu, du côté de l'entrée, d'un commutateur (31) servant d'élément de commande, qui présente une position d'actionnement pour la fonction de freinage d'urgence.

5. Système de commande de freinage selon la revendication 4, **caractérisé en ce que** la position d'actionnement est réalisée sous forme de position de commutation commune pour la fonction de freinage d'urgence et pour une fonction de frein de stationnement manuelle.

6. Système de commande de freinage selon la revendication 4, **caractérisé en ce que** le commutateur (31) présente une position de commutation supplémentaire optionnelle pour une fonction de frein de stationnement manuelle.

7. Système de commande de freinage selon l'une quelconque des revendications 1 à 6, **caractérisé en ce qu'**au moyen du dispositif de freinage, on peut obtenir une fonction de frein de stationnement automatique et/ou manuelle.

8. Système de commande de freinage selon la revendication 7, **caractérisé en ce que** pour obtenir la fonction de frein de stationnement, la soupape de commutation (16) est sollicitée par une commande électrique de la soupape de commutation (16) dans la position sans pression (16b) et la deuxième soupape de commutation (17) n'est pas alimentée en courant.

9. Système de commande de freinage selon l'une quelconque des revendications 3 à 8, **caractérisé en ce que** pour obtenir la fonction de sécurité, la soupape de commutation (16) et la deuxième soupape de commutation (17) ne sont pas alimentées en courant.

10. Système de commande de freinage selon l'une quelconque des revendications 1 à 9, **caractérisé en ce que** le frein à accumulateur à ressort fonctionne en tant que frein de service, l'espace de pression de déclenchement de freinage (7a ; 7b) étant associé à une soupape de freinage (40).

11. Système de commande de freinage selon l'une quelconque des revendications 1 à 10, **caractérisé en ce que** le frein à accumulateur à ressort (5a ; 5b) fonctionne en tant que frein de service, qui peut être sollicité hydrauliquement au moyen d'une pression de freinage s'appliquant dans un espace de pression de freinage (50a ; 50b) dans la direction d'une position de freinage, une soupape de freinage (52) étant associée à l'espace de pression de freinage (50a ; 50b).

12. Utilisation du système de commande de freinage selon l'une quelconque des revendications précédentes dans une flotte de véhicules comprenant différents engins de travail avec des poids d'utilisation différents, en particulier différents chariots de manutention avec des capacités de charge différentes.
